# EUROPEAN PATENT APPLICATION

(11) **EP 3 135 904 A1**
(43) Date of publication of application: **01.03.2017**
(21) Application number: 16185975.6
(22) Date of filing: 26.08.2016
(51) Int. Cl.: F03D 7/02, F16H 1/32, F03D 15/00

(54) **WINDMILL DRIVING APPARATUS, WINDMILL DRIVING SYSTEM, AND REDUCTION GEAR**

(30) Priority: 27.08.2015 JP 2015167912
(71) Applicant: Nabtesco Corporation, Tokyo 102-0093 (JP)
(72) Inventor: MURAKAMI, Tomoyuki, Fuwa-gun, Gifu (JP); ASAKAWA, Yuichi, Fuwa-gun, Gifu (JP)
(74) Representative: Grünecker Patent- und Rechtsanwälte PartG mbB

(57) **Abstract**

There are provided a windmill driving apparatus, a windmill driving system, and a reduction gear that are capable of facilitate reduction of production man-hours and management man-hours of an input gear and a spur gear by sharing the gears. A windmill driving apparatus (1A) configured to rotationally drive a movable portion (204) of a windmill (200), includes: a motor (M) including a power shaft (35); a pinion (101) engaging with a rotary driving gear (202) provided in the windmill (200); and a reduction gear (1) coupled to each of the power shaft (35) and the pinion (101), the reduction gear (1) configured to transmit power from the power shaft (35) to the pinion (101), wherein: the reduction gear (1) includes an input gear (82) rotated by power transmission from the power shaft (35), a plurality of spur gears (53) engaging with the input gear (82), and an eccentrically swinging reduction portion (30) having a plurality of crankshafts (50) fixed respectively to the plurality of spur gears (53), and a tooth portion which the input gear (82) has and a tooth portion which each of the plurality of spur gears (53) has are same in shape.

## Description

### BACKGROUND OF THE INVENTION

### Field of the Invention

The present invention relates to a windmill driving apparatus that includes an input gear to which power is transmitted from a power shaft and spur gears engaging with the input gear, a windmill driving system, and a reduction gear.

### Background Art

A windmill including a nacelle disposed at an upper portion of a tower and a plurality of blades attached to the nacelle, is used for a wind turbine generator or the like. The nacelle is provided so as to be rotatable with respect to the tower. A yaw driving apparatus rotationally drives the nacelle with respect to the tower in such a manner that the nacelle can be circled in response to a wind direction. On the other hand, the plurality of blades are disposed so as to be swingable in a pitch direction with respect to a hub attached to the nacelle. A pitch driving apparatus rotationally drives a shaft portion of the blades with respect to the hub in such a manner that a pitch angle of each of the blades can be varied.

As a windmill driving apparatus represented by the above yaw driving apparatus and pitch driving apparatus, for example, an eccentrically swinging reduction gear disclosed in Japanese patent application publication No. 2014-211204 can be suitably used. In the reduction gear, a rotary driving force transmitted from a motor is transmitted to a plurality of spur gears through an input gear. Then, orbital motion of a crankshaft and rotation of a carrier are carried out through a swing mechanism including the crankshaft, an external gear, and a pin internal tooth. In response to the rotation of the carrier, an output shaft spline-coupled to the carrier is rotated. Thus, a large amount of torque can be acquired through a pinion attached to the output shaft.

Typically, the input gear and the spur gears used for the above eccentrically swinging reduction gear are provided as a reduction mechanism in a spur gear meshing method. The input gear and the spur gears mutually have different specifications. Particular specifications, such as the number of teeth of each of the input gear and the spur gears, are determined in such a manner that a reduction ratio required for the entire reduction gear is achieved by a reduction ratio between the input gear and the spur gears and a reduction ratio in an eccentrically swinging reduction portion.

In this manner, in a case where the input gear and the spur gears mutually have the different specifications, shapes of both of the gears cannot be shared. A manufacturing jig is required to be prepared for each of the input gear and the spur gears. Manufacturers are therefore required to retain a large number of manufacturing jigs. Each of the input gear and the spur gears is required to be produced and managed in a different process. Thus, production man-hours and management man-hours inevitably increase.

The specific reduction ratio required for the entire reduction gear is different according to a user and a use. Thus, the reduction ratio in the reduction gear is required to be adjusted in response to such a user and a use. In the above eccentrically swinging reduction gear, typically, by varying the number of teeth of the input gear and the number of teeth of each of the spur gears are varied so as to appropriately change the reduction ratio, the reduction ratio of the entire reduction gear can be adjusted. However, in the above eccentrically swinging reduction gear, reduction is also performed in the reduction portion configured by the swing mechanism. Thus, a case where only the reduction portion configured by the swing mechanism can easily satisfy the reduction ratio required for the entire reduction gear, may occur. In such a case, there is no need to adjust the reduction ratio in the reduction mechanism including the input gear and the spur gears. In addition, a need to form the reduction mechanism with the input gear and the spur gears decreases. Thus, the number of teeth between the input gear and the spur gears can be shared. However, in the related art, a coupling method between the input gear and a shaft portion coupled to the input gear, and a coupling method between each of the spur gears and a shaft portion coupled to each of the spur gears, are mutually different. Therefore, even when the number of teeth is shared between the input gear and the spur gears, the input gear and the spur gears each have a different shape as a whole. Therefore, the input gear and the spur gears are still different types of gear members. There is a need to prepare individual manufacturing jigs for the input gear and the spur gears. Thus, the number of component types increases in the reduction gear.

### SUMMARY OF THE INVENTION

The present invention has been contrived in consideration of the above circumstances. An object of the present invention is to provide a windmill driving apparatus, a windmill driving system, and a reduction gear (i.e., reducer) that are capable of promoting reduction of production man-hours and management man-hours of an input gear and a spur gear by sharing the gears.

One aspect of the present invention is directed to a windmill driving apparatus configured to rotationally drive a movable portion of a windmill, characterized in that the windmill driving apparatus comprises: a motor including a power shaft; a pinion engaging with a rotary driving gear provided in the windmill; and a reduction gear coupled to each of the power shaft and the pinion, the reduction gear configured to transmit power from the power shaft to the pinion, wherein: the reduction gear includes an input gear rotated by power transmission from the power shaft, a plurality of spur gears engaging with the input gear, and an eccentrically swinging reduction portion having a plurality of crankshafts fixed respectively to the plurality of spur gears, and a tooth portion which the input gear has and a tooth portion which each of the plurality of spur gears has are same in shape.

According to the present aspect, the tooth portion of the input gear and the tooth portion of each of the spur gears are substantially the same in shape. The teeth of the input gear and the teeth of each of the spur gears can be formed by the same processing. Thus, a processing cost can be reduced. By promoting the input gear and the spur gears to be shared in this manner, production man-hours and management man-hours of the gears can be reduced and time and labor can be saved.

The input gear and the plurality of spur gears may be made of a same material.

According to the present aspect, the input gear and the spur gears can be further facilitated to be shared, and thus, a production cost can be further reduced.

The reduction gear may further include a planetary gear reduction portion provided between the power shaft and a driving shaft, the planetary gear reduction portion being configured to transmit the power from the power shaft to the driving shaft.

According to the present aspect, the combination of the eccentrically swinging reduction portion and the planetary gear reduction portion can easily achieve a larger reduction ratio.

The eccentrically swinging reduction portion may include: a case having an internal tooth provided on an inner circumference side of the case; a swing gear having an external tooth engaging with the internal tooth, the swing gear being swung by the plurality of crankshafts according to rotation of the plurality of spur gears; a swing carrier configured to rotate according to swing of the swing gear; and an output shaft coupled to each of the swing carrier and the pinion.

Another aspect of the present invention is directed to a windmill driving system comprising: a plurality of windmill driving apparatuses as described above; and a rotary driving gear engaging with the pinion of each of the plurality of windmill driving apparatuses, wherein the motors of the plurality of windmill driving apparatuses mutually synchronize and rotate the power shafts in such a manner that the movable portion is rotationally driven.

According to the present invention, a plurality of windmill driving apparatuses described above are used so as to rotationally drive the movable portion, and thus, a larger cost reduction effect can be expected.

Still another aspect of the present invention is directed to a reduction gear coupled to a power shaft of a motor, the reduction gear comprising: an input gear rotated by the power shaft; a plurality of spur gears engaging with the input gear; and an eccentrically swinging reduction portion having a plurality of crankshafts fixed respectively to the plurality of spur gears, a tooth portion which the input gear has and a tooth portion which each of the plurality of spur gears has are same in shape.

According to the present invention, the tooth portion of the input gear and the tooth portion of each of the spur gears are substantially the same in shape. Thus, the tooth portion of the input gear and the tooth portion of each of the spur gears can be formed by the same processing. By promoting the input gear and the spur gears to be shared in this manner, the production man-hours, the management man-hours, and costs of the gears can be effectively reduced.

### BRIEF DESCRIPTION OF THE DRAWINGS

Fig. 1 is a schematic sectional view of an exemplary windmill according to one embodiment of the present invention.
Fig. 2 is a sectional view of an exemplary configuration of a windmill driving apparatus according to a first embodiment.
Fig. 3 is a plan view of a schematic configuration of an input shaft portion and spur gears.
Fig. 4 is a sectional view of an exemplary configuration of arrangements of the input shaft portion, one of the spur gears, and a crankshaft. Fig. 4 illustrates the input shaft portion (driving shaft and input gear), the crankshaft, and the one of the spur gears, one by one.
Fig. 5 is a side view of a planetary gear reduction portion according to a second embodiment.

### DESCRIPTION OF EMBODIMENTS

One embodiment according to the present invention will be described below with reference to the drawings.

In the following embodiments, an example of a windmill driving apparatus used as a yaw driving apparatus that rotationally drives a nacelle (i.e., movable portion) with respect to a tower (i.e., base portion), will be described. A configuration of the windmill driving apparatus to be described below can be generally applied to a driving apparatus for rotationally driving a movable portion of a windmill with respect to a base portion. Therefore, for example, a windmill driving apparatus(s) to be described below may be used as a pitch driving apparatus that rotationally drives a blade (i.e., movable portion) in a pitch direction with respect to a hub (i.e., base portion).

### [Windmill]

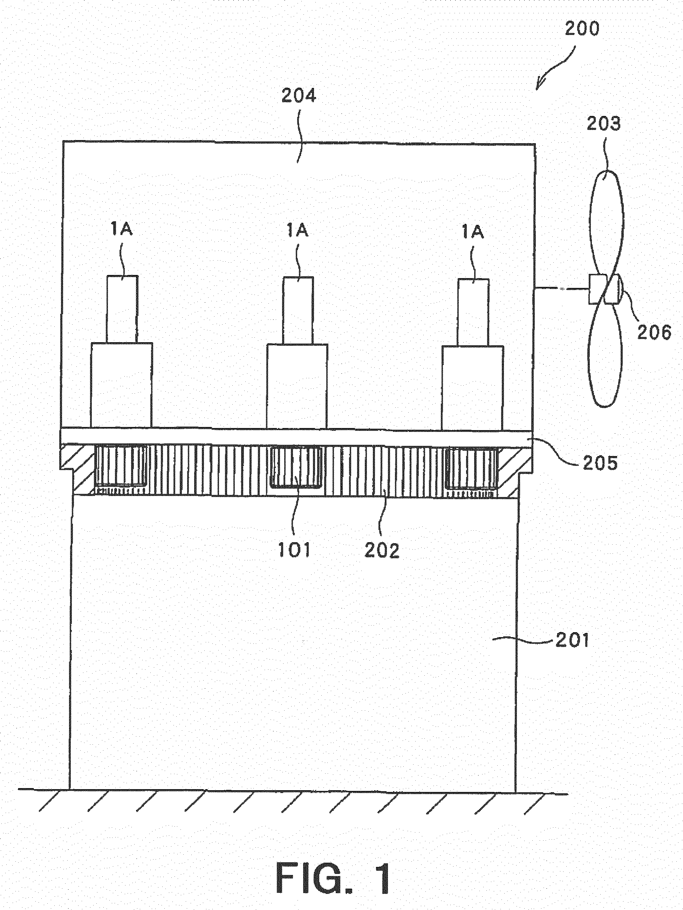

Fig. 1 is a schematic sectional view of an exemplary windmill 200 according to one embodiment of the present invention. The windmill 200 in the present example includes a tower 201, a nacelle 204, and a plurality of blades 203. The nacelle 204 is supported by the tower 201 so as to be rotatable. The plurality of blades 203 are attached to the nacelle 204 through a hub 206.

The tower 201 is a base portion disposed on the ground. An internal-gear-typed ring gear 202 formed as a rotary driving gear is securely attached to the inside of the tower 201. A rotary stand 205 securely attached to the nacelle 204 and a plurality of windmill driving apparatuses 1A attached to the rotary stand 205 are provided in the nacelle 204. Each of the windmill driving apparatuses 1A includes a pinion 101 that protrudes from a hole formed on the rotary stand 205 and engages with the ring gear 202. Each of the windmill driving apparatuses 1A is positioned in the nacelle 204 in such a manner that the pinions 101 are disposed respectively in a plurality of areas, in a circumferential direction inside the ring gear 202. Therefore, motors of the plurality of windmill driving apparatuses 1A mutually synchronize and then rotate power shafts. The pinion 101 of each of the windmill driving apparatuses 1A is rotationally driven. Thus, the entire nacelle 204 together with the rotary stand 205 is rotationally driven (circularly driven) with respect to the tower 201. Accordingly, directions of the hub 206 and the blades 203 attached to the nacelle 204 are varied. Please note that, for example, a controller is coupled to the plurality of windmill driving apparatuses 1A and the controller controls each of the motors. Therefore, the rotary synchronization of the power shafts between the motors of the plurality of windmill driving apparatuses 1A is performed. The nacelle 204 further includes, for example, a power transmission shaft and a dynamo that are coupled to the hub 206.

The hub 206 is attached to the nacelle 204 so as to be rotatable. In addition, the plurality of blades 203 are attached through shaft portions respectively. The blades 203 are disposed so as to have an angle equivalent therebetween. Each of the blades 203 is provided so as to be rotatable in a pitch direction with respect to the hub 206 around the shaft portion as the center. Each of the blades 203 is rotationally driven by a pitch driving apparatus in such a manner that the pitch angle is appropriately varied. Note that although an illustration of the pitch driving apparatus will be omitted in the present example, a configuration of the pitch driving apparatus is not particularly limited. For example, a pitch driving apparatus having a configuration similar to that of the windmill driving apparatus 1A to be described later, can rotationally drive each of the blades 203.

### [Windmill Driving Apparatus]

Next, the configuration of a windmill driving apparatus 1A will be described. The windmill driving apparatus 1A includes an eccentrically swinging reduction portion. Rotary power supplied from the power shaft of the motor may be transmitted to the eccentrically swinging reduction portion without being rotationally reduced (refer to a first embodiment to be described below). Alternatively, the rotary power may be transmitted to the eccentrically swinging reduction portion after being rotationally reduced by another mechanism (for example, a mechanism, such as a planetary gear reduction portion) (refer to a second embodiment to be described later).

### First Embodiment

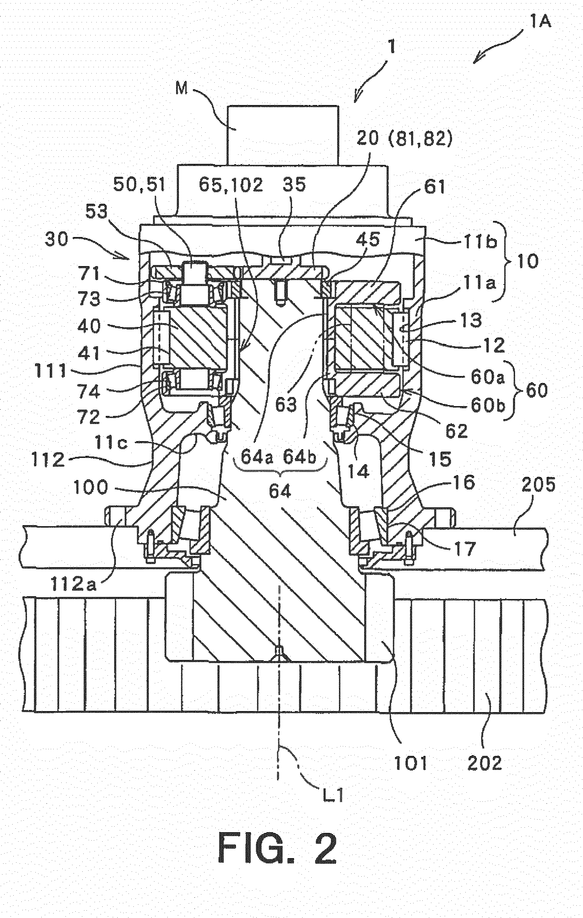

Fig. 2 is a sectional view of an exemplary configuration of the windmill driving apparatus 1A according to a first embodiment. The windmill driving apparatus 1A according to the present embodiment includes a motor M including a power shaft 35, and a reduction gear 1. The reduction gear 1 is coupled to each of the power shaft 35 and a pinion 101, and transmits power from the power shaft 35 to the pinion 101. As described above, the windmill driving apparatus 1A is firmly fixed to the rotary stand 205 of the nacelle 204. In particular, in the present example, a fastening bolt (not illustrated) is inserted into each of bolt holes 112a formed at an output-side portion 112 of a main case portion 11a of the windmill driving apparatus 1A. The windmill driving apparatus 1A is fixed to the rotary stand 205 with the fastening bolts.

The reduction gear 1 includes an input shaft portion 20, a plurality of spur gears 53, an eccentrically swinging reduction portion 30, and an output shaft 100. The input shaft portion 20 is coupled to the power shaft 35. The plurality of spur gears 53 engage with an input gear 82 of the input shaft portion 20. The eccentrically swinging reduction portion 30 includes a plurality of crankshafts 50 individually fixed to each of the plurality of spur gears 53. One end portion of the output shaft 100 is coupled to the eccentrically swinging reduction portion 30, and the other end portion protrudes from a case 10.

The eccentrically swinging reduction portion 30 includes the case 10, an external gear 40, a swing carrier 60, and the output shaft 100. The case 10 has an internal tooth 12 on the side of inner circumference (i.e., on the inner circumferential surface). The external gear 40 has an external tooth 41 engaging with the internal tooth 12 in the case 10. The swing carrier 60 rotatably retains the plurality of crankshafts 50. The output shaft 100 is coupled to each of the swing carrier 60 and the pinion 101. The case 10 is formed so as to be tubular. The case 10 houses the input shaft portion 20, the plurality of spur gears 53, the plurality of crankshafts 50, the external gear 40, and the swing carrier 60 inside. The external gear 40 rotatably retains the plurality of crankshafts 50 through an external-tooth bearing (not illustrated). The external gear 40 functions as a swing gear swung by the plurality of crankshafts 50 in response to rotation of each of the plurality of spur gears 53. The swing carrier 60 rotatably retains each of the crankshafts 50, and also retains the external gear 40 through the plurality of crankshafts 50.

According to the reduction gear 1 having the configuration descried above, rotary power input from the motor M to the input shaft portion 20 is rotationally reduced by the eccentrically swinging reduction portion 30, and then is output from the output shaft 100. The pinion 101 is provided at the other end portion of the output shaft 100 that protrudes from the case 10. The pinion 101 is disposed so as to engage with the ring gear 202. Therefore, the rotary power transmitted to the output shaft 100 through the input shaft portion 20 and the eccentrically swinging reduction portion 30, is output to the pinion 101 and the ring gear 202 as yaw driving force in a state where the torque has increased.

In Fig. 2, reference sign L1 represents a central axis of the output shaft 100. A central axis of the inner circumferential surface on which the internal tooth 12 of the case 10 is disposed, is coaxially positioned with the central axis L1. In the following descriptions, a direction simply expressed as an axial direction, means a direction extending on the central axis L1 or a direction parallel to the central axis L1. A direction perpendicular to the central axis L1 is referred to as a radial direction. A direction around the central axis L1 is referred to as a circumferential direction.

The case 10 includes the main case portion 11a and a sub-case portion 11b. The main case portion 11a is formed so as to be tubular, and has both end portions open. The sub-case portion 1b is fixed to the side of one end portion of the main case portion 11a. In the present example, an edge portion of the main case portion 11a and an edge portion of the sub-case portion 11b are fixed with a bolt (not illustrated), and thereby, the main case portion 11a and the sub-case portion 11b are coupled to each other. The output shaft 100 protrudes from the other end portion of the main case portion 11a on the side opposite to the one end portion to which the sub-case portion 11b is fitted. An annular wall portion 11c projecting into the inside in the radial direction, is formed on an inner circumferential surface of a middle portion between the one end portion and the other end portion of the main case portion 11a.

The main case portion 11a includes an input-side portion 111 and the output-side portion 112. The input-side portion 111 is positioned on the side of the one end portion when the annular wall portion 11c is defined as a base, specifically, on the side of the sub-case portion 11b. The output-side portion 112 is positioned on the side of the other end portion when the annular wall portion 11c is defined as the base, specifically, on the side towards which the output shaft 100 protrudes. The input-side portion 111 houses the eccentrically swinging reduction portion 30. The above internal tooth 12 is provided on the inner circumferential surface of the input-side portion 111.

The internal tooth 12 configured by a plurality of internal tooth pins formed to be pin-shaped. The internal tooth pins are fitted into a plurality of pin grooves 13 formed at regular intervals in the circumferential direction over an entire region of the inner circumferential surface of the input-side portion 111 of the main case portion 11a. The internal tooth pins are arranged in such a manner that the longitudinal direction of each of the internal tooth pins is disposed parallel to the central axis L1. The internal tooth 12 having the above configuration, is disposed so as to engage with the external tooth 41 of the above external gear 40.

A first bearing housing groove 14 having an annular shape is formed on the annular wall portion 11c of the main case portion 1l1a. A first bearing 15 configured by a tapered roller bearing or the like, is inserted into the first bearing housing groove 14. An outer ring of the first bearing 15 abuts on or comes close to a bottom surface of the first bearing housing groove 14 in the axial direction. In addition, the outer ring abuts on or comes close to a side surface of the first bearing housing groove 14 in the radial direction. Accordingly, the first bearing 15 is attached to the first bearing housing groove 14.

A second bearing housing groove 16 having an annular shape is formed on the other end portion (outside end portion) of the output-side portion 112. A second bearing 17 configured by a tapered roller bearing or the like, is inserted into the second bearing housing groove 16. An outer ring of the second bearing 17 abuts on or comes close to a bottom surface of the second bearing housing groove 16 in the axial direction. In addition, the outer ring abuts on or comes close to a side surface of the second bearing housing groove 16 in the radial direction. Accordingly, the second bearing 17 is attached to the second bearing housing groove 16.

The output shaft 100 is disposed on the inner circumference side of an inner ring of the first bearing 15 and on the inner circumferential side of an inner ring of the second bearing 17, and the output shaft 100 is rotatably retained with respect to the case 10. The output shaft 100 protrudes from the first bearing 15 towards the input-side portion 111 side of the main case portion 11a. A portion of the output shaft 100 which protrudes towards the input-side portion 111 side is coupled to the eccentrically swinging reduction portion 30. In the present example, an output-shaft-side spline portion 102 is formed on an outer circumferential surface of the portion of the output shaft 100 which protrudes towards the input-side portion 111 side. The output-shaft-side spline portion 102 engages with a carrier-side spline portion 65 formed on the swing carrier 60 of the eccentrically swinging reduction portion 30, in such a manner that the output shaft 100 and the eccentrically swinging reduction portion 30 are coupled to each other.

The motor M is attached to the sub-case portion 11b of the case 10. The power shaft 35 which the motor M has extends towards the inside of the sub-case portion 11b, and is securely coupled to the input shaft portion 20 disposed in the sub-case portion 11b. The rotary power generated by the motor M is transmitted to the input shaft portion 20 through the power shaft 35.

The input shaft portion 20 has a spur gear structure. A central axis of the power shaft 35 of the motor M and a central axis of the input shaft portion 20 are positioned on the central axis L1 of the output shaft 100. The input shaft portion 20 in the present example includes a driving shaft 81 and the input gear 82. The driving shaft 81 is coupled to the power shaft 35. The power shaft 35 transmits the power to the driving shaft 81. The input gear 82 is provided around the driving shaft 81. The power transmitted from the power shaft 35 rotates the input gear 82 through the driving shaft 81. The details of the driving shaft 81 and the input gear 82 which are provided as different bodies in this manner will be described later. The input gear 82 is disposed so as to engage with each of the plurality of spur gears 53. Accordingly, the rotary power transmitted from the power shaft 35 to the input shaft portion 20 can be transmitted to the plurality of crankshafts 50 fixed individually to the plurality of spur gears 53 respectively.

Note that, although, in the present example, the power shaft 35 of the motor M and the driving shaft 81 of the input shaft portion 20 are provided as different bodies, the driving shaft 81 may be configured by the power shaft 35, and the power shaft 35 and the driving shaft 81 may be integrally provided. In such a case, the power shaft 35 of the motor M extends up to a position adjacent to the input gear 82, and the input gear 82 is directly coupled to the power shaft 35. A further coupling member may be provided between the power shaft 35 of the motor M and the driving shaft 81 of the input shaft portion 20, and the power shaft 35 and the driving shaft 81 may be coupled to each other through the coupling member.

The swing carrier 60 included in the eccentrically swinging reduction portion 30, includes a first retaining portion 61, a second retaining portion 62, a support 63, and a coupling tube portion 64. The first retaining portion 61 rotatably retains one end portion of the crankshaft 50 (i.e., an end portion on the side of the input shaft portion 20 and the spur gears 53). The second retaining portion 62 rotatably retains the other end portion of the crankshaft 50 (i.e., an end portion on the side towards which the output shaft 100 protrudes). The support 63 couples the first retaining portion 61 and the second retaining portion 62 with each other. The coupling tube portion 64 couples the swing carrier 60 to the output shaft 100. Note that, for convenience to understanding, the support 63 is denoted with a double-dashed chain line in Fig. 1.

The first retaining portion 61 and the second retaining portion 62 each are formed to be annular. The first retaining portion 61 and the second retaining portion 62 are disposed at positions spaced apart in the axial direction so as to face to each other. The support 63 is provided to extend between a substantially central region of the first retaining portion 61 in terms of the radial direction and a substantially central region of the second retaining portion 62 in terms of the radial direction so as to couple the first retaining portion 61 and the second retaining portion 62. The coupling tube portion 64 is provided to extend between an inner circumferential edge of the first retaining portion 61 and an inner circumferential edge of the second retaining portion 62. The coupling tube portion 64 has a cylindrical shape. The carrier-side spline portion 65 is formed on an inner circumferential surface of the coupling tube portion 64. As described above, the carrier-side spline portion 65 engages with the output-shaft-side spline portion 102 of the output shaft 100, and thus, the output shaft 100 and the eccentrically swinging reduction portion 30 are coupled to each other.

First end portion through-holes 71 are formed in the first retaining portion 61. The one end portion of the crankshaft 50 is rotatably retained in the first end portion through-hole 71 through a first crankshaft bearing 73. Second end portion through-holes 72 are formed on the second retaining portion 62. The other end portion of the crankshaft 50 is rotatably retained in the second end portion through-hole 72 through a second crankshaft bearing 74.

The swing carrier 60 in the present example is divided into two in terms of the axial direction, and the swing carrier 60 is configured by a first half body 60a disposed on the side of the sub-case portion 11b and a second half body 60b disposed on the side towards which the output shaft 100 protrudes. The first half body 60a includes the above first retaining portion 61, a first support half portion forming a part of the support 63, and a first tube half portion 64a forming a part of the coupling tube portion 64. Meanwhile, the second half body 60b includes the above second retaining portion 62, a second support half portion forming a part of the support 63, and a second tube half portion 64b forming a part of the coupling tube portion 64.

A bolt (not illustrated) is inserted into the first support half portion and the second support half portion to extend therebetween. By coupling the first support half portion and the second support half portion by means of the bolt, the first half body 60a and the second half body 60b are coupled to each other. The above carrier-side spline portion 65 is formed over individual inner circumferential surfaces of the first tube half portion 64a and the second tube half portion 64b.

Each of the crankshafts 50 includes a shaft main body 51 and an eccentric body (not illustrated) provided with the shaft main body 51. The spur gear 53 is attached to one end portion of the shaft main body 51. That is, the one end portion of the shaft main body 51 protrudes from the first end portion through-hole 71 towards the sub-case portion 11b side. The spur gear 53 is fixed to the one end portion of the shaft main body 51 that protrudes from the first end portion through-hole 71. A portion of the shaft main body 51 on the side of the one end which is disposed between the spur gear 53 and the external gear 40, is rotatably retained in the first end portion through-hole 71 through the first crankshaft bearing 73. The other end side of the shaft main body 51 is rotatably retained in the second end portion through-hole 72 through the second crankshaft bearing 74.

In a state where the crankshaft 50 is retained by the swing carrier 60, the eccentric body of the crankshaft 50 is disposed between the first retaining portion 61 and the second retaining portion 62 of the swing carrier 60. On the other hand, in the external gear 40 provided between the first retaining portion 61 and the second retaining portion 62, a support through-hole (not illustrated) through which the support 63 of the above swing carrier 60 passes, and a crankshaft through-hole (not illustrated) into which the crankshaft 50 is inserted, are formed in such a manner that the support through-hole and the crankshaft through-hole are in parallel in the axial direction. The eccentric body of the crankshaft 50 is disposed in the crankshaft through-hole of the external gear 40 through a crankshaft bearing (not illustrated).

The external tooth 41 of the external gear 40 is provided so as to have teeth the number of which is less than, by one or more, the number of teeth of the internal tooth 12 on the inner circumferential of the case 10. Accordingly, each time the crankshaft 50 rotates, the engagement between the external tooth 41 and the internal tooth 12 shifts. Thus, the external gear 40 makes eccentric motion (crank motion) so as to rotate in a swinging manner.

In the reduction gear 1 having the above configuration, when the rotary power transmitted from the power shaft 35 of the motor M rotates the input shaft portion 20, each of the spur gears 53 engaging with the input gear 82 of the input shaft portion 20 rotates and then each of the crankshafts 50 rotates. By rotating each of the crankshafts 50, the external gear 40 performs eccentric rotation in a swinging manner while shifting the engagement with the internal tooth 12. In accordance with the eccentric rotation of the external gear 40, each of the crankshafts 50 rotates while performing orbital motion around the central axis L1 as the center. In response to the swing (i.e., eccentric rotation) of the external gear 40 and the orbital motion of each of the crankshafts 50, the swing carrier 60 retaining the crankshaft 50 rotates. The output shaft 100 which is spline-coupled to the swing carrier 60 rotates. In this manner, the rotary power is transmitted from the power shaft 35 of the motor M to the output shaft 100. Then, the torque is transmitted from the pinion 101 provided with the output shaft 100, to the ring gear 202, and thereby, the direction of the nacelle 204 provided with the rotary stand 205 and the direction of the blades 203 are varied.

### [Input Shaft Portion, Spur Gear, and Crankshaft of Reduction Portion]

Next, the configurations of the input shaft portion 20, the plurality of spur gears 53, and the crankshafts 50 in the windmill driving apparatus 1A (reduction gear 1) according to the present embodiment, will be described.

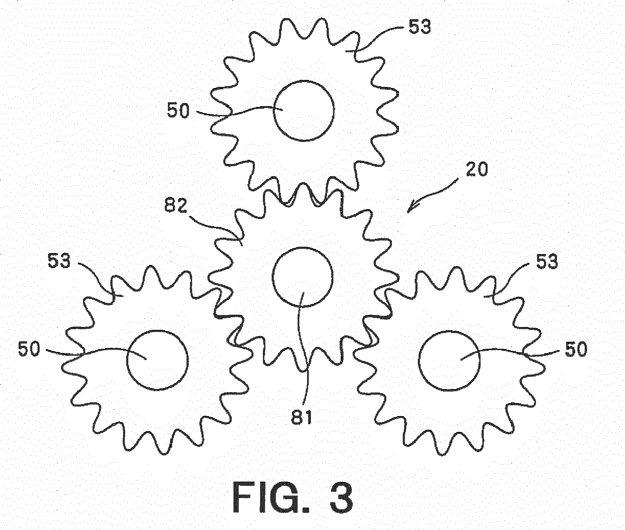

Fig. 3 is a plan view of a schematic configuration of the input shaft portion 20 and the spur gears 53. According to the present embodiment, the plurality of spur gears 53 (three spur gears 53 in the present example) rotate in accordance with rotation of the input gear 82. The crankshafts 50 individually attached to the plurality of spur gears 53 respectively also rotate together with the spur gears 53 in accordance with the rotation of the input gear 82. Note that, in the example illustrated in Fig. 3, the three spur gears 53 are provided. The number of spur gears 53 is not particularly limited, and may be more than three or less than three.

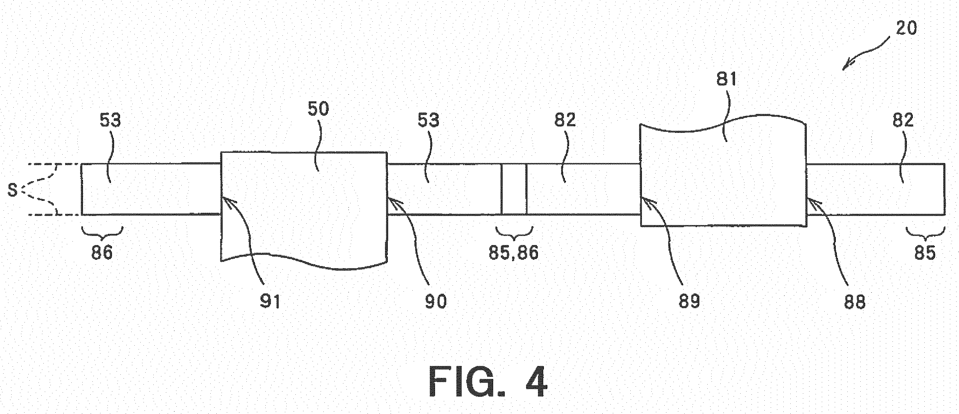

Fig. 4 is a sectional view of an exemplary configuration of arrangements of the input shaft portion 20, one of the spur gears 53, and one of the crankshafts 50. Fig. 4 illustrates one input shaft portion 20 (i.e., driving shaft 81 and input gear 82), one of the crankshafts 50, and one of spur gears 53.

According to the present embodiment, a tooth portion (hereinafter, referred to as an "input gear tooth portion") 85 which the input gear 82 has, and a tooth portion (hereinafter, referred to as a "spur gear tooth portion") 86 which each of the plurality of spur gears 53 has, are the same in shape. Since the input gear tooth portion 85 and the spur gear tooth portion 86 are the same in shape, for example, "a module (numerical value indicating a size of a tooth) of the input gear tooth portion 85 and a module of the spur gear tooth portion 86 become the same, and the modules of the pair of gears mutually engaging with each other always become the same", "the number of teeth of the input gear tooth portion 85 and the number of teeth of the spur gear tooth portion 86 become the same", and further "the addendum modification coefficient of the input gear tooth portion 85 (i.e., the input gear 82) and the addendum modification coefficient of the spur gear tooth portion 86 (each of the spur gears 53) also become the same". Furthermore, the input gear 82 and the plurality of spur gears 53 are made of the same material (for example, a metal).

Furthermore, the input gear 82 and each of the plurality of spur gears 53 are entirely the same in shape. An engaging portion (hereinafter, referred to as an "input gear engaging portion") 89 of the input gear 82 with respect to the driving shaft 81, and an engaging portion (hereinafter, referred to as a "spur gear engaging portion") 91 of each of the spur gears 53 with respect to the crankshafts 50, have the same structure. That is, according to the present embodiment, the driving shaft 81 coupled to the power shaft 35 of the motor M and the input gear 82 coupled to each of the spur gears 53 are provided as different bodies. The input gear engaging portion 89 and an engaging portion (hereinafter, referred to as a "driving shaft engaging portion") 88 of the driving shaft 81 engage with each other. Thereby, the input gear 82 is fixed to the driving shaft 81. Similarly, each of the crankshafts 50 and each of spur gears 53 are provided as different bodies. The spur gear engaging portion 91 and an engaging portion (hereinafter, referred to as a "crankshaft engaging portion") 90 of each of the crankshafts 50 engage with each other. Thereby, each of the crankshafts 50 is fixed to each of the spur gears 53. In this case, the input gear 82 and each of the spur gears 53 are preferably positioned in such a manner that the front surfaces of the input gear 82 and each spur gear 53 are disposed on the same plane denoted with reference sign S in Fig. 4 and the back surfaces of the input gear 82 and each spur gear 53 are disposed on the same plane denoted with reference sign S in Fig. 4.

Since the driving shaft 81, the input gear 82, each of the spur gears 53, and each of the crankshafts 50 have the above configuration, an "engagement manner between the driving shaft 81 and the input gear 82" and an "engagement manner between each of the crankshafts 50 and each of the spur gears 53" have the same structure. The specific structure of these engagement manners is not particularly limited. For example, a gear engagement structure based on a combination of a protruding portion and a recess portion, a spline engagement structure, and other fitting structures can achieve "the engagement of the input gear 82 with the driving shaft 81" and "the engagement of each of the spur gears 53 with each of the crankshafts 50".

As described above, according to the present embodiment, the input gear tooth portion 85 and the spur gear tooth portion 86 are the same in shape. Thus, tools, such as a jig necessary for production, can be shared between the input gear tooth portion 85 and the spur gear tooth portion 86. As a result, production man-hours and management man-hours can be reduced. The input gear 82 and each of the spur gears 53 are the same in shape, and are also configured by the same material. Thus, gears of the same type can be used for both of the input gear 82 and each of the spur gears 53. In this manner, by using common parts for the input gear 82 and each of the spur gears 53, the substantial number of types of parts can be reduced, the types and the number of tools necessary for producing the input gear 82 and each of the spur gears 53 can be replaced with types and the number of tools necessary for producing a single gear, and as a result, the production man-hours and the management man-hours can be dramatically reduced. The engaging structure of the input gear 82 with the driving shaft 81 and the engaging structure of each of the spur gears 53 with the crankshaft engaging portion 90 are shared. Thus, the production man-hours and the management man-hours can be further reduced.

In this manner, the number of types of parts is reduced and the types and the number of production tools are reduced. Further, the production man-hours and the management man-hours are reduced, and then time and labor are saved. Thus, a production cost for the apparatus and a cost necessary for maintenance can be effectively inhibited.

### Second Embodiment

The reduction gear 1 in the windmill driving apparatus 1A according to the present embodiment, further includes a planetary gear reduction portion provided between the power shaft 35 of the motor M and the driving shaft 81. The planetary gear reduction portion performs rotational reduction of the power from the power shaft 35 and then transmits the power to the driving shaft 81.

That is, the windmill driving apparatus 1A according to the present embodiment is provided as a multiple-stage reduction mechanism (in the present embodiment, two-stage reduction mechanism). The deceleration of the rotary power at the first stage is carried out in the planetary gear reduction portion, and further, the deceleration of the rotary power at the second stage is carried out in the eccentrically swinging reduction portion 30 described above. Note that, as for the arrangement position of the planetary gear reduction portion according to the present embodiment, it is not particularly limited as long as the planetary gear reduction portion is arranged between the motor M and the eccentrically swinging reduction portion 30. For example, in a case where the windmill driving apparatus 1A has a configuration as illustrated in Fig. 2, the planetary gear reduction portion can be preferably disposed inside the sub-case portion 11b of the case 10.

In the present embodiment, elements which are the same as elements in the first embodiment described above are denoted with the same reference signs, and the detailed descriptions thereof will be omitted. In particular, elements provided at a subsequent stage of the input shaft portion 20 (that is, elements relating to "the input shaft portion 20 (particularly, input gear 82) - the eccentrically swinging reduction portion 30 - the output shaft 100 - the pinion 101 - the ring gear 202") are shared with the above first embodiment.

Therefore, a mechanism that transmits power from the power shaft 35 of the motor M to the input shaft portion 20 (particularly, driving shaft 81), will be mainly described below.

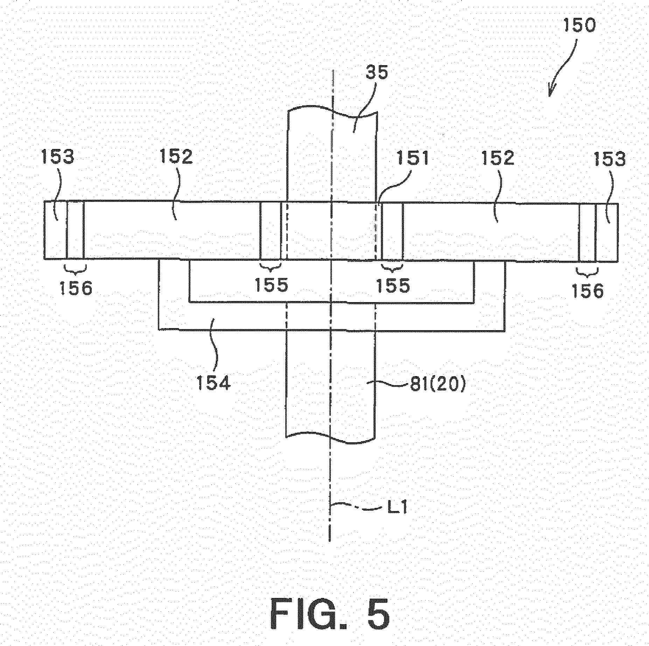

Fig. 5 is a side view of the planetary gear reduction portion 150 according to the second embodiment. The planetary gear reduction portion 150 includes a power gear 151, a plurality of driven gears 152 (three driven gears in the present embodiment), an outer gear 153, and a driving carrier 154. The power gear 151 is fixed to the power shaft 35. The plurality of driven gears 152 engage with the power gear 151. The outer gear 153 has an internal tooth engaging with each of the driven gears 152. The driving carrier 154 rotatably supports each of the driven gears 152, and also is coupled to the driving shaft 81. Note that, in Fig. 5, the meshing portion between the power gear 151 and each of the driven gears 152 is denoted with reference numeral 155, and the meshing portion between each of the driven gears 152 and the outer gear 153 is denoted with reference numeral 156.

The power gear 151 forms a sun gear of the planetary gear reduction portion 150. Rotary power transmitted from the power shaft 35 of the motor M rotates the power gear 151 around the central axis L1 as the center. The fixing structure between the power shaft 35 and the power gear 151 is not limited, and can be achieved with, for example, a gear fixing structure based on a combination of a protruding portion and a recess portion, a spline fixing structure, or another fixing structure. Note that, in the present example, the power shaft 35 and the power gear 151 are provided as different bodies. The power shaft 35 and the power gear 151 may be integrally provided. In this case, by providing a gear engaging with each of the driven gears 152 at a leading end portion of the power shaft 35 extending from a main body of the motor M into the case 10 (i.e., sub-case portion 11b), the power shaft 35 can function as the power gear 151. A further coupling member may be provided between the power shaft 35 and the power gear 151. Then, the power shaft 35 and the power gear 151 may be fixed through the further coupling member.

The plurality of driven gears 152 form planetary gears of the planetary gear reduction portion 150. The plurality of driven gears 152 are disposed around the power shaft 35 and the power gear 151 with the central axis L1 as the center, and engage with a gear formed on the power gear 151 (refer to the "meshing portion 155 between the power gear and each of the driven gears"). The driven gears 152 are disposed in such a manner that angles between the driven gears 152 become equal in the circumferential direction.

The outer gear 153 is provided as a ring-shaped gear member. A gear engaging with each of the driven gears 152 is formed on the inner circumference of the outer gear 153 (refer to the "meshing portion 156 between each of the driven gears and the outer gear"), and the outer gear 153 is fixed to the sub-case portion 11b of the case 10 (refer to Fig. 2). Therefore, the above plurality of driven gears 152 engaging with each of the outer gear 153 and the power gear 151, rotate while performing orbital motion around the central axis L1 (power shaft 35 and power gear 151) in accordance with the rotation of the power gear 151.

The driving carrier 154 is formed as a planet carrier that performs orbital motion together with the plurality of driven gears 152 described above. The driving carrier 154 rotates the driving shaft 81 (input shaft portion 20) together with itself (i.e., the driving carrier 154) around the central axis L1 in accordance with the orbital motion of each of the plurality of driven gears 152. The fixing method between the driving carrier 154 and the driving shaft 81 is not particularly limited. The driving carrier 154 and the driving shaft 81 are at least fixed in such a manner that the orbital motion of each of the driven gears 152 is converted into the rotation of the driving shaft 81. Note that, in the present example, the driving carrier 154 and the driving shaft 81 (input shaft portion 20) are provided as different bodies. The driving carrier 154 and the driving shaft 81 may be integrally provided.

In the windmill driving apparatus 1A in which a reduction portion other than the eccentrically swinging reduction portion 30 (in the present embodiment, the planetary gear reduction portion 150) is provided as in the present embodiment, by making the input gear tooth portion 85 and the spur gear tooth portion 86 to be the same in shape (refer to Fig. 4), similarly to the "windmill driving apparatus 1A in which only the eccentrically swinging reduction portion 30 is provided" according to the above first embodiment, the number of types of parts can be reduced, the types and the number of production tools can be decreased, the production man-hours and management man-hours can reduced, and the time and labor can be saved.

The present invention is not limited to the above individual embodiments, and includes various modifications to be conceived by those skilled in the art, and beneficial effects of the present invention are also not limited to those described above. That is, various additions, changes, and partial deletions may be made without departing from the scope of the conceptual idea and spirit of the present invention derived from the contents specified in a claim(s) and equivalents thereof.

## Claims

1. A windmill driving apparatus (1A) configured to rotationally drive a movable portion (204) of a windmill (200), **characterized in that** the windmill driving apparatus (1A) comprises:
a motor (M) including a power shaft (35);
a pinion (101) engaging with a rotary driving gear (202) provided in the windmill (200); and
a reduction gear (1) coupled to each of the power shaft (35) and the pinion (101), the reduction gear (1) configured to transmit power from the power shaft (35) to the pinion (101), wherein:
the reduction gear (1) includes an input gear (82) rotated by the power transmission from the power shaft (35), a plurality of spur gears (53) engaging with the input gear (82), and an eccentrically swinging reduction portion (30) having a plurality of crankshafts (50) fixed respectively to the plurality of spur gears (53), and
a tooth portion which the input gear (82) has and a tooth portion which each of the plurality of spur gears (53) has are same in shape.

2. The windmill driving apparatus (1A) as defined in claim 1, **characterized in that** the input gear (82) and the plurality of spur gears (53) are made of a same material.

3. The windmill driving apparatus (1A) as defined in claim 1 or 2, **characterized in that** the reduction gear (1) further includes a planetary gear reduction portion (150) provided between the power shaft (35) and a driving shaft (81), the planetary gear reduction portion (150) being configured to transmit the power from the power shaft (35) to the driving shaft (81).

4. The windmill driving apparatus (1A) as defined in any one of claims 1 to 3, **characterized in that** the eccentrically swinging reduction portion (30) includes:
a case (10) having an internal tooth (12) provided on an inner circumference side of the case (10);
a swing gear (40) having an external tooth (41) engaging with the internal tooth (12), the swing gear (40) being swung by the plurality of crankshafts (50) according to rotation of the plurality of spur gears (53);
a swing carrier (60) configured to rotate according to swing of the swing gear (40); and
an output shaft (100) coupled to each of the swing carrier (60) and the pinion (101).

5. A windmill driving system comprising:
a plurality of windmill driving apparatuses (1A) defined in any one of claims 1 to 4; and
a rotary driving gear (202) engaging with the pinion (101) of each of the plurality of windmill driving apparatuses (1A),
wherein the motors (M) of the plurality of windmill driving apparatuses (1A) mutually synchronize and rotate the power shafts (35) in such a manner that the movable portion (204) is rotationally driven.

6. A reduction gear (1) coupled to a power shaft (35) of a motor (M), the reduction gear (1) comprising:
an input gear (82) rotated by the power shaft (35);
a plurality of spur gears (53) engaging with the input gear (82); and
an eccentrically swinging reduction portion (30) having a plurality of crankshafts (50) fixed respectively to the plurality of spur gears (53),
a tooth portion which the input gear (82) has and a tooth portion which each of the plurality of spur gears (53) has are same in shape.
